# EUROPÄISCHE PATENTSCHRIFT

(11) **EP 1 935 230 B1**
(45) Veröffentlichungstag und Bekanntmachung des Hinweises auf die Patenterteilung: **30.09.2009**
(21) Anmeldenummer: 07021288.1
(22) Anmeldetag: 31.10.2007
(51) Int. Cl.: A01D 90/12, A01F 15/08

(54) **Erntemaschine**
Harvester
Moissonneuse

(30) Priorität: 22.12.2006 DE 102006061007
(43) Veröffentlichungstag der Anmeldung: 25.06.2008
(73) Patentinhaber: Alois Pöttinger Maschinenfabrik Ges. m.b.H., 4710 Grieskirchen (AT)
(72) Erfinder: Ackermann, Stefan, 4710 Grieskirchen (AT); Edlbauer, Karl, 4710 Tollet (AT); Riipinen, Tapio, 41340 Laukaa (FI)
(74) Vertreter: Thoma, Michael

(56) Entgegenhaltungen:
- EP-A- 0 074 533
- EP-A- 0 100 020
- EP-A- 1 518 453
- US-A- 4 550 556
- US-A1- 2004 250 694

## Beschreibung

Die vorliegende Erfindung betrifft eine Erntemaschine, insbesondere einen Ladewagen, mit einer Aufnahmevorrichtung zur Aufnahme von halm- und/oder blattförmigem Erntegut vom Boden, einer Fördervorrichtung, vorzugsweise in Form eines Förderrotors, zur Förderung des aufgenommenen Ernteguts von der Aufnahmevorrichtung durch einen Förderkanal in einen Erntegutraum, sowie einer Austragsvorrichtung zum Ausbringen zumindest eines Applikationsstoffs, insbesondere eines Silagezusatzes, auf das Erntegut.

Halm- bzw. blattförmiges Erntegut, wie Heu, Stroh oder auch Grünfutter, werden regelmäßig mit Ladewagen eingebracht, die von einem Schlepper gezogen werden und eine Aufnahmevorrichtung in Form einer rotierenden Stachelwalze, einer sogenannten Pick-up, aufweisen, mittels derer das Erntegut vom Boden aufgesammelt werden kann. Von der Pick-up wird das aufgenommene Erntegut regelmäßig durch eine Fördervorrichtung in Form eines rotierend angetriebenen Rotors durch einen Förderkanal in den Laderaum gefördert, wobei ggf. dem Förderrotor ein Schneidwerk zugeordnet ist, um das Erntegut beim Fördern durch den Förderkanal zu zerschneiden. In ähnlicher Weise sind auch Ballenpressen mit einer entsprechenden Aufnahmevorrichtung ausgestattet, von der aus das aufgenommene Erntegut in einen Pressenraum gefördert wird, in dem das Erntegut zu einem Ballen gepresst wird, um dann in Ballenform aufbewahrt zu werden.

Bei der Erntegutlagerung insbesondere in nördlicheren Ländern ist die Restfeuchte des Ernteguts ein Problem, da hierdurch Fäulnis und Schimmel des Ernteguts bewirkt werden kann. Es wurde deshalb bereits vorgeschlagen, dem Erntegut Applikationsstoffe, insbesondere Silagezusätze, zuzusetzen, um die Siliereigenschaften des Ernteguts zu verbessern. Hierzu sind verschiedene, meist flüssige Applikationsstoffe bekannt, die möglichst gut verteilt auf das Erntegut aufgesprüht werden. Beispielsweise zeigt die DE 32 32 746 C2 eine Erntemaschine in Form einer Ballenpresse, bei der mittels mehrerer Sprühdüsen Propionsäure als Applikationsstoff auf das Erntegut gesprüht wird. Der Applikationsstoff wird dabei im Bereich der Pick-up aufgesprüht, wodurch eine gründliche Vermischung des Applikationsstoffs mit dem Erntegut erreicht werden soll. Von Nachteil ist hierbei allerdings, dass der Applikationsstoff die Pick-up sowie die daran anschließende Fördervorrichtung angreift, was insbesondere zu vorschneller Korrosionsbeanspruchung und Verschleiß der Aufnahme- und Fördervorrichtungen führen kann. In ähnlicher Weise beschreibt die EP 1518453 A1 einen Feldhäcksler, bei dem unmittelbar hinter der Gegenschneide, jedoch noch stromauf der Förderrotoren ein Siliermittel auf das Erntegut gesprüht wird. Aus der EP 0100020 A1 ist ferner eine Ballenpresse bekannt, bei der eine Behandlungsflüssigkeit von dem Pressenstempel aus direkt in den Pressenraum eingesprüht wird.

Eine andere Problematik ist bei derartigen Erntemaschinen, dass die aufzubringenden Applikationsstoffe oftmals zu wechseln bzw. zu ersetzen sind, beispielsweise wenn von Lohnunternehmern verschiedene Felder mit verschiedenem Erntegut bearbeitet werden. Auch müssen zum Teil beachtliche Mengen an Applikationsstoffen ausgebracht werden, wodurch die auf der Erntemaschine mitgeführten Applikationsstoffvorräte in regelmäßigen, bisweilen kurzen Zyklen wieder aufgefüllt werden müssen. Dies ist bislang bei herkömmlichen Erntemaschinen recht mühsam, da die Applikationsstoffbehälter oft schwer zugänglich sind und zudem über Befüllöffnungen mit geringen Durchsatzmengen nachgefüllt werden müssen. Hier will die vorliegende Erfindung Abhilfe schaffen.

Der Erfindung liegt die Aufgabe zugrunde, eine verbesserte Erntemaschine der genannten Art zu schaffen, die Nachteile des Standes der Technik vermeidet und letzteren in vorteilhafter Weise weiterbildet. Vorzugsweise sollen ein verbesserter Applikationsstoffaustrag, der bei guter Durchmischung mit dem Erntegut die Fördervorrichtung im Förderkanal vor dem Erntegutraum nicht angreift, und eine einfache Handhabung der Austragsvorrichtung erreicht werden.

Erfindungsgemäß wird diese Aufgabe durch eine Erntemaschine gemäß Anspruch 1 gelöst. Bevorzugte Ausgestaltungen der Erfindung sind Gegenstand der abhängigen Ansprüche.

Es wird also vorgeschlagen, den Applikationsstoff nicht schon im Bereich der Aufnahmevorrichtung und der daran anschließenden Fördervorrichtung, die insbesondere in Form eines Rotors ausgebildet sein kann, auf das Erntegut auszubringen, sondern dem Erntegutstrom den Applikationsstoff erst nach dem Durchlaufen der Fördervorrichtung sozusagen stromab des Rotors zuzusetzen. Erfindungsgemäß ist die Austragsvorrichtung derart angeordnet, dass die Applikationsstoffausbringung erst nach der Fördervorrichtung erfolgt. Hierdurch wird vermieden, dass die Eingriffselemente sowohl der Aufnahmevorrichtung als auch der daran anschließenden Fördervorrichtung mit dem Applikationsstoff in Berührung kommen, wodurch ein chemisches Einwirken des Applikationsstoffs auf diese Förderelemente vermieden und dementsprechend Verschleiß bzw. Korrosion dieser Teile verhindert wird. Insbesondere kann der Applikationsstoff ausschließlich im Bereich des stromabseitigen Endes des Förderkanals in das Erntegut gegeben werden.

Sofern der Fördervorrichtung ein Schneidwerk zum Zerschneiden des durch den Förderkanal geförderten Ernteguts zugeordnet ist, erfolgt die Ausbringung des Applikationsstoffs auch stromab dieses Schneidwerks, um eine entsprechende Belastung des Schneidwerks mit dem Applikationsstoff zu vermeiden.

Erfindungsgemäß erfolgt der Applikationsstoffaustrag etwa im Bereich der Mündung des Förderkanals in den Erntegutraum, jedoch noch stromauf des Erntegutraumes, der bei einem Ladewagen den Laderaum bildet. Hierdurch ist einerseits die Belastung der Eingriffselemente der Fördervorrichtung und auch des Schneidwerks vermieden, andererseits kann noch eine gute Durchmischung des Applikationsstoffs mit dem Erntegut erreicht werden.

Insbesondere kann der Applikationsstoff von Abstreifern aus bzw. im Bereich dieser Abstreifer abgegeben werden, mittels derer der Erntegutstrom von den Eingriffselementen der Fördervorrichtung abgestreift wird. Vorteilhafterweise ist zumindest ein solcher Abstreifer, regelmäßig jedoch eine Mehrzahl solcher Abstreifer, auf einer stromabseitigen Seite der Fördervorrichtung angeordnet, um zu verhindern, dass das Erntegut an der umlaufenden Fördervorrichtung hängen bleibt und zu bewirken, dass das Fördergut kontinuierlich und stabil durch den Förderkanal hindurch in den Erntegutraum gefördert wird. Umfasst die Fördervorrichtung vorteilhafterweise einen sich quer über den Förderkanal erstreckenden Rotor mit bezüglich der Rotordrehachse auskragenden Fördervorsprüngen insbesondere in Form von Fingern, Zinken oder sonstigen Vorsprungsflanken, können in Weiterbildung der Erfindung über den Förderkanal verteilt mehrere Abstreifer vorgesehen sein, die zwischen benachbarte Fördervorsprünge des Rotors greifen, so dass sie von den Fördervorsprüngen mitgenommenes Erntegut von den Fördervorsprüngen abstreifen. Insbesondere können diese Abstreifer etwa schräg bzw. tangential zum Korpus des Rotors zwischen dessen Fördervorsprünge eingreifen.

Durch Anordnung der Ausbringelemente an den Abstreifern kann eine gute Durchdringung des Ernteguts mit dem Applikationsstoff erreicht werden, wobei dennoch eine Belastung der Rotorelemente durch den Applikationsstoff vermieden wird, da der Applikationsstoff nur auf Erntegut gegeben wird, das bereits von den Rotorelementen abgestreift ist und mit diesen nicht mehr in Berührung gelangt. Durch die Anordnung der Ausbringelemente an den Abstreifern wird der Applikationsstoff sozusagen in den Erntegutstrom injiziert. Dennoch wird durch die sozusagen im Erntegutstrom liegende Anordnung der Austragselemente keine zusätzliche Fördergutbehinderung bewirkt. Vorteilhafterweise sind die Abstreifer auch stromab des optional vorgesehenen Schneidwerks angeordnet, so dass auch das Schneidwerk nicht von dem Applikationsstoff beeinträchtigt wird.

Nach einer vorteilhaften Ausführung der Erfindung können die Abstreifer im wesentlichen plattenförmig ausgebildet sein, wobei die Austragselemente vorzugsweise an einer der Fördervorrichtung abgewandten Schmal- bzw. Stirnseite der Abstreifer angeordnet sind. Durch die Anordnung der Austragselemente auf der Abströmseite der Abstreifer kann eine gute Verteilung des Applikationsstoffs insbesondere beim Aussprühen erreicht werden. Zudem sind die Austragselemente davor bewahrt, verstopft bzw. zugedeckt oder von Fremdkörpern im Erntegut gar beschädigt zu werden, wenn sie auf der Abströmseite der Abstreifer sozusagen im Förderschatten der Abstreifer angeordnet sind.

Um eine bestmögliche Verteilung des Applikationsstoffs zu erreichen, sind in vorteilhafter Weiterbildung der Erfindung an einem Abstreifer mehrere Austragselemente vorgesehen, die in unterschiedliche Richtungen ausgerichtet sind bzw. den Applikationsstoff in verschiedene Richtungen absetzen, insbesondere aussprühen und/oder verspritzen.

Nach einer besonders vorteilhaften Ausführung der Erfindung können die Abstreifer an einer der Fördervorrichtung abgewandten Hinterflanke, d.h. auf ihrer Abströmseite, mit vorzugsweise stufenförmigen bzw. absatzartigen Konturwölbungen versehen sein, im Bereich derer die Ausbringelemente vorgesehen sind. Insbesondere kann die Hinterflanke der Abstreifer stufenförmige Absätze besitzen, wobei die Ausbringelemente vorzugsweise an den aufeinander zu laufenden Flanken eines solchen Absatzes angeordnet sind und in verschiedene Richtungen den Applikationsstoff aussprühen bzw. verspritzen oder in anderer Weise ausbringen.

Zusätzlich oder alternativ zu der Anordnung der Ausbringelemente an den Abstreifern kann zumindest ein weiteres Ausbringelement im Bereich der Unterkante und/oder Oberkante der Mündung des Förderkanals in den Erntegutraum angeordnet sein, wobei vorteilhafterweise insbesondere an einer Unterkante der Mündung des Förderkanals in den Erntegutraum eine Reihe von Ausbringelementen nebeneinander angeordnet ist. Hierdurch kann das Erntegut von verschiedenen Seiten her mit Applikationsstoff beaufschlagt werden, wodurch eine besonders gleichmä-ßige Verteilung des Applikationsstoffs erreicht werden kann.

Die Ausbringelemente der Austragsvorrichtung können grundsätzlich verschieden ausgebildet sein. Insbesondere können sie vorzugsweise düsenförmige Austrittsöffnungen bilden, über die vorzugsweise flüssige Applikationsstoffe nebelförmig versprüht oder auch strahlförmig verspritzt werden können.

Die Ausbringelemente werden in Weiterbildung der Erfindung von zumindest einem Applikationsstoffspeicherbehälter her gespeist, wobei vorzugsweise der Applikationsstoff mittels einer Pumpe von dem Applikationsstoffspeicherbehälter abgezogen und druckbeaufschlagt auf die Ausbringelemente gefördert wird. Gemäß einem weiteren Aspekt der vorliegenden Erfindung ist dieser zumindest eine Applikationsstoffspeicherbehälter unter dem Maschinenrahmen angeordnet, der den Erntegutraum trägt. Insbesondere kann der zumindest eine Applikationsstoffbehälter unter dem Boden des Ladewagenladeraums aufgehängt sein. Hierdurch erhält die Erntemaschine einen niedrigen Schwerpunkt, was die Fahreigenschaften begünstigt. Zudem kann ein einfaches Befüllen bzw. ein einfaches Wechseln des Speicherbehälters erfolgen. Insbesondere kann der Speicherbehälter fass- bzw. tonnenförmig ausgebildet und liegend unter dem Maschinenrahmen aufgehängt sein.

Um eine einfache Handhabung der Speicherbehälter zu ermöglichen, ist für den zumindest einen Applikationsstoffspeicherbehälter eine bewegliche Aufhängung vorgesehen, mittels derer der Applikationsstoffspeicherbehälter zwischen einer unter dem Maschinenrahmen liegenden Betriebsstellung und einer demgegenüber besser zugänglichen Wechsel- bzw. Rüststellung hin- und herbewegt werden kann. Im Betrieb ist der Applikationsstoffspeicherbehälter sicher unter dem Maschinenrahmen verstaut. Muss der Speicherbehälter gewechselt oder gewartet werden, kann er mittels der beweglichen Aufhängung in eine günstiger zugängliche Wechsel- bzw. Rüststellung gebracht werden, insbesondere unter dem Maschinenrahmen heraus in eine seitlich überstehende Position gebracht werden.

Die bewegliche Aufhängung kann grundsätzlich verschieden ausgebildet sein. Beispielsweise kann sie schubladenartig herausziehbare Führungsmittel umfassen, mittels derer der Applikationsstoffspeicherbehälter unter dem Maschinenrahmen seitlich herausgezogen werden kann. Alternativ oder zusätzlich umfasst die Aufhängung in bevorzugter Weiterbildung der Erfindung jedoch eine Schwenkvorrichtung, vorzugsweise eine Hubschwenkvorrichtung, zum Verschwenken des Applikationsstoffspeicherbehälters zwischen dessen Betriebsstellung und dessen Wechsel-/Rüststellung. Durch Verschwenken kann der Applikationsstoffspeicherbehälter nicht nur bei begrenzten Platzverhältnissen in die gewünschte Wechsel-/Rüststellung bewegt werden, sondern es kann auch die Abzugsöffnung des Applikationsstoffbehälters, über die der Applikationsstoff abgezogen wird, in eine oben liegende Position gebracht werden, was in der Betriebsstellung nicht notwendigerweise der Fall zu sein braucht.

Um eine einfache Handhabung zu gewährleisten, ist die Aufhängung und damit der zum Teil recht schwere Applikationsstoffspeicherbehälter motorisch bewegbar. In Weiterbildung der Erfindung kann die Schwenkvorrichtung eine fremdenergiebetätigte Antriebsvorrichtung vorzugsweise in Form eines hydraulischen Stellantriebs aufweisen.

Um den Applikationsstoffspeicherbehälter nicht mühsam an der Erntemaschine nachfüllen zu müssen, ist in Weiterbildung der Erfindung ein Schnellwechsler zum Auswechseln der Applikationsstoffspeicherbehälter vorgesehen. Die Aufhängung kann in Weiterbildung der Erfindung lösbare Schnellbefestigungsmittel aufweisen, mittels derer ein Applikationsstoffbehälter vorzugsweise werkzeugfrei an der Aufhängung befestigt und von dieser wiederum gelöst werden kann.

Vorteilhafterweise sind mehrere Speicherbehälter vorgesehen, die denselben Applikationsstoff, jedoch auch verschiedene Applikationsstoffe enthalten können, so dass für verschiedene Anwendungszwecke verschiedene Applikationsstoffe auf das Erntegut oder auch eine variierende Mischung der verschiedenen Applikationsstoffe auf das Erntegut gegeben werden können. In Weiterbildung der Erfindung sind hierzu die mehreren Applikationsstoffspeicherbehälter mit einer gemeinsamen Misch- und/oder Verteilvorrichtung verbunden, über die wahlweise aus einem oder einem anderen oder mehreren gleichzeitig der darin befindliche Applikationsstoff abgezogen werden kann. Vorzugsweise sind die Anschlüsse der Misch- und/oder Verteilvorrichtung beispielsweise über Ventile in ihrem Durchfluss steuerbar, wodurch das Abziehen aus den verschiedenen Applikationsstoffspeicherbehältern entsprechend gesteuert werden kann.

In Weiterbildung der Erfindung ist eine vorzugsweise elektronische Steuervorrichtung zur Steuerung des Applikationsstoffaustrags in Abhängigkeit von Maschinenbetriebs- und/oder Erntegutparametern vorgesehen, wobei die Steuereinrichtung bzw. zumindest Komponenten hiervon an dem Schlepper oder auch an der Erntemaschine selbst angeordnet sein können.

In Weiterbildung der Erfindung umfasst die Steuereinrichtung Steuermittel zur Steuerung des Applikationsstoffaustrages in Abhängigkeit der Fahrgeschwindigkeit und der aufzunehmenden Erntegutmenge, die über einen geeigneten Erntegutmengensensor, beispielsweise einen Schwadgrößenerfassungssensor, bestimmt werden kann. Alternativ oder zusätzlich kann die Steuereinrichtung den Applikationsstoffaustrag in Abhängigkeit der Fördermenge und/oder der Fördergeschwindigkeit der Fördervorrichtung der Erntemaschine steuern. Alternativ oder zusätzlich kann die Steuereinrichtung beim Applikationsstoffaustrag die Feuchte und/oder den Ernteguttyp berücksichtigen, die bzw. der über einen entsprechenden Feuchtesensor bzw. einen Ernteguterfassungssensor bestimmt werden kann.

In besonders bevorzugter Weiterbildung der Erfindung kann die Steuereinrichtung in Abhängigkeit der genannten Betriebs- bzw. Erntegutparameter auch die Applikationspunkte variieren und/oder einzeln steuern. Je nach Anwendungssituation können einzelne Ausbringelemente zugeschaltet oder abgeschaltet werden, um beispielsweise den Austrag des Applikationsstoffes verstärkt an den vorgenannten Abstreifern oder alternativ verstärkt an der Unterkante der Förderkanalmündung zu bewirken.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht einer Erntemaschine in Form eines Ladewagens nach einer bevorzugten Ausführung der Erfindung, der von einem Schlepper gezogen wird,
- Fig. 2:: eine schematische Seitenansicht der Aufnahmevorrichtung, der daran anschließenden Fördervorrichtung in Form eines Rotors mit diesen zugeordneten Abstreifern sowie der Ausbringelemente der Applikationsstoffaustragsvorrichtung an den Abstreifern bzw. im Mündungsbereich des Förderkanals des Ladewagens aus Fig. 1,
- Fig. 3:: eine perspektivische Darstellung eines plattenförmigen Abstreifers aus Fig. 2, die die an der stromabseitigen Hinterkante des Abstreifers vorgesehenen Austrittsöffnungen der in den Abstreifer integrierten Ausbringelemente der Applikationsstoffaustragsvorrichtung zeigt,
- Fig. 4:: eine perspektivische Darstellung eines Abstreifers aus Fig. 2 nach einer zu Fig. 3 alternativen Ausführungsform der Erfindung, nach der die stromabseitige Hinterkante des Abstreifers stufenförmige Absätze aufweist, im Bereich derer die Austrittsöffnungen der Applikationsstoffausbringelemente angeordnet sind,
- Fig. 5:: eine schematische Heckansicht des Ladewagens aus Fig. 1, die die Aufhängung der Applikationsstoffspeicherbehälter unter dem Maschinenrahmen des Ladewagens und deren Verschwenkbarkeit zeigt, und
- Fig. 6:: eine schematische Darstellung des Applikationsstoffspeicherbehälters in verschiedenen Schwenkstellungen, die die Verschwenkbarkeit der Applikationsstoffspeicherbehälter-Aufhängung verdeutlicht.

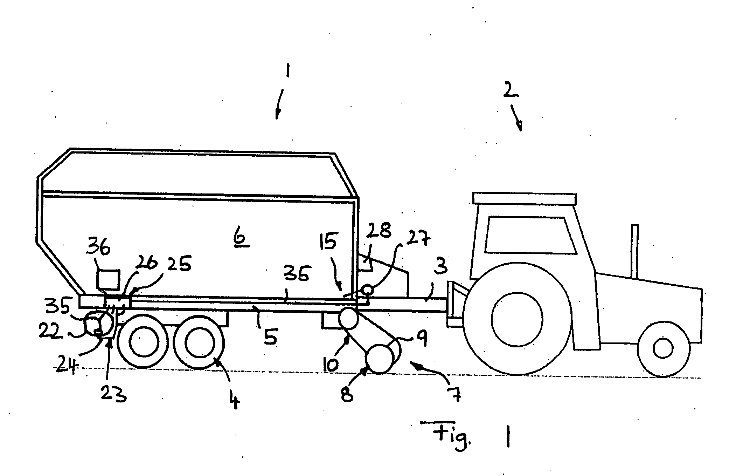

Figur 1 zeigt nach einer Ausführung der vorliegenden Erfindung eine Erntemaschine in Form eines Ladewagens 1, der in an sich bekannter Weise mittels einer Deichsel 3 an einem Schlepper 2 angelenkt ist und von letzterem gezogen wird. Der Ladewagen stützt sich über ein Fahrwerk 4 auf dem Boden ab, wobei das Fahrwerk 4 einen Maschinenrahmen 5 trägt, der wiederum den Laderaum 6 des Ladewagens 1 trägt und über die Deichsel 3 mit dem Schlepper 2 verbunden ist.

Etwa im Bereich des vorderen Endes des Laderaums 6 besitzt der Ladewagen 1 eine anheb- und absenkbare Aufnahmevorrichtung 7 in Form einer Pick-up 8, die eine rotierende Stachelwalze 9 zum Aufsammeln von auf dem Boden liegendem Erntegut aufweist, das dann von einer der Aufnahmevorrichtung 7 nachgeschalteten Fördervorrichtung 10 in den Laderaum 6 gefördert wird. Der Antrieb der Aufnahmevorrichtung 7 und der Fördervorrichtung 10 kann in an sich bekannter Weise über eine Zapfwelle vom Schlepper 2 her, aber auch hydraulisch mittels geeigneter Hydromotoren erfolgen.

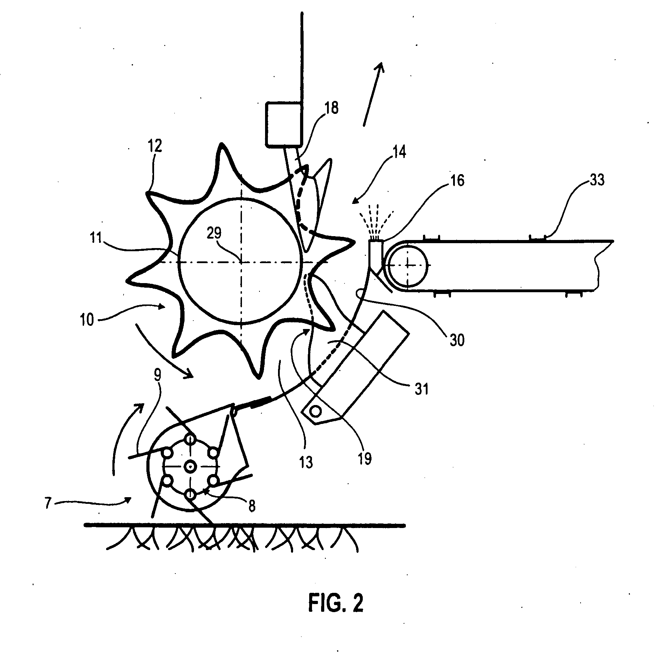

Wie Figur 2 zeigt, umfasst die Fördervorrichtung 10 vorteilhafterweise einen sich quer zur Fahrtrichtung erstreckenden Rotor 11, der insgesamt etwa walzenförmig ausgebildet ist und um eine liegende Rotorachse 29 antreibbar ist. Der Rotor 11 umfasst dabei in an sich bekannter Weise Rotorzinken 12, die vom Umfang des Rotors 11 vorstehen und in einen Förderkanal 13 hineinragen, in den das Erntegut von der Aufnahmevorrichtung 7 abgegeben wird, so dass die Rotorzinken 12 das Erntegut erfassen. Von einem Boden 30 des Förderkanals 13 her ragt in letzteren ein Schneidwerk 19 mit seinen Messern 31 hinein, die mit den Rotorzinken 12 dergestalt zusammenwirken, dass durch den Förderkanal 13 gefördertes Erntegut zerschnitten wird.

In Umlaufrichtung des Rotors 11 hinter dem genannten Schneidwerk 19 am stromabseitigen Ende des Förderkanals 13 sind dem Rotor 11 Abstreifer 18 zugeordnet, die sich etwa tangential zum Rotor 11 erstrecken und zwischen dessen Rotorzinken 12 greifen, vgl. Figur 2. In der gezeichneten Ausführung greifen die Abstreifer 18 von oben her in dem Förderkanal 13 zwischen die Rotorzinken 12, wobei sich die Abstreifer 18 im wesentlichen aufrecht erstrecken. Je nach Ausbildung des Förderkanals kann dies jedoch verschieden gestaltet sein.

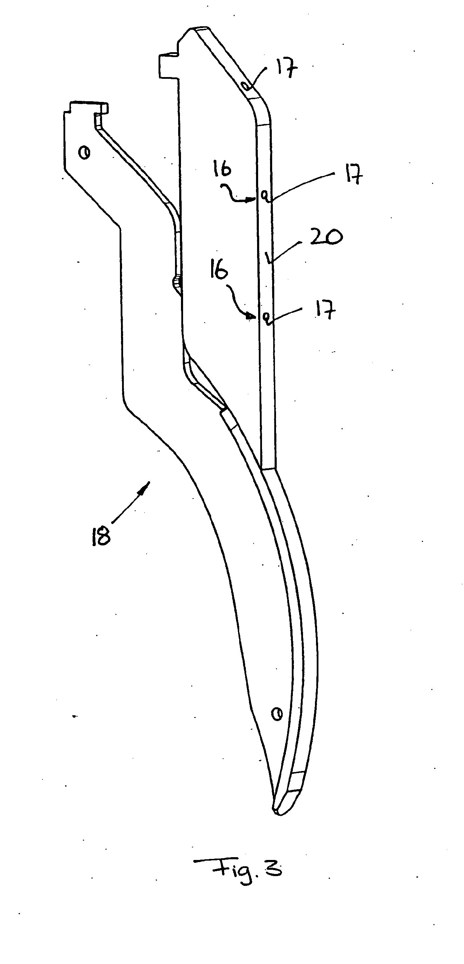

Wie Figur 3 zeigt, sind die Abstreifer 18 im wesentlichen plattenförmig ausgebildet, so dass sie wie schmale Finger zwischen die auf dem Rotor 11 vorgesehenen Rotorzinken 12 greifen können, die in Richtung der Rotorachse 29 auf dem Rotor 11 voneinander beabstandet aufgereiht sind. Die Abstreifer 18 sind dabei mit ihrer Kontur an den Rotor 11 und dessen Rotorzinken 12 derart angepasst, dass von den Rotorzinken 12 gefördertes Erntegut auf die Abstreifer 18 aufläuft und von diesen vom Rotor 11 abgehoben wird.

Wie Figur 3 zeigt, sind in die Hinterkanten 20 der Abstreifer 18, die dem Rotor 11 abgewandt sind und auf die das Erntegut aufläuft, Ausbringelemente 16 einer Austragsvorrichtung 15 integriert, durch die ein Applikationsstoff, insbesondere ein Silagezusatz, auf das durch den Förderkanal 13 geförderte Erntegut ausgebracht werden kann. Vorteilhafterweise umfassen die Ausbringelemente 16 in den plattenförmigen Abstreifern 18 integrierte Applikationsstoff-Förderkanäle, die in der Hinterkante 20 des jeweiligen Abstreifers 18 münden und dort vorzugsweise düsenförmige Austrittsöffnungen 17 bilden, vgl. Figur 3.

Wie Figur 3 zeigt, sind vorteilhafterweise an einem Abstreifer 18 mehrere Ausbringelemente 16 angeordnet, und zwar vorzugsweise derart, dass sie in verschiedene Richtungen ausgerichtet sind, d.h. sozusagen in verschiedene Richtungen "schauen" und der Applikationsstoffaustrag aus den jeweiligen Ausbringelementen 16 verschiedene Hauptrichtungen hat. Hauptrichtung meint dabei die Achse bezüglich derer das Austragsbild des abgegebenen Applikationsstoffes zentriert ist. Vorzugsweise kann der regelmäßig flüssige Applikationsstoff versprüht werden, wobei in diesem Fall die vorgenannte Hauptrichtung die Achse des Sprühkegels meint. Alternativ oder zusätzlich kann jedoch auch zumindest ein Ausbringelement einen Applikationsstoffstrahl verspritzen.

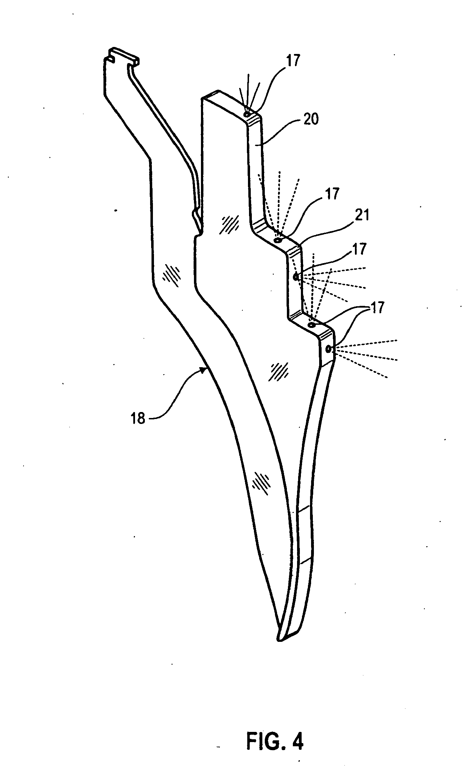

In bevorzugter Weiterbildung der Erfindung kann zumindest ein Abstreifer 18 abweichend von der in Figur 3 gezeigten Gestaltung die in Figur 4 gezeigte Formgebung besitzen. Der in Figur 4 gezeigte, ebenfalls im wesentlichen plattenförmige Abstreifer 18 umfasst eine treppenförmig abgestufte Hinterkante 20 mit mehreren Absätzen 21. Vorteilhafterweise sind dabei die Austrittsöffnungen 17 der Ausbringelemente 16 jeweils an den aufeinander zu laufenden Flanken eines Absatzes 21 angeordnet, wodurch sie im wesentlichen in zueinander - grob gesprochen - rechtwinklig geneigten Richtungen spritzen bzw. sprühen. Hierdurch kann eine besonders gute Vermischung des Applikationsstoffes und Durchdringung des Erntegutstroms erreicht werden. Bei der in Figur 2 gezeigten Einbausituation der Abstreifer 18 sind die Ausbringelemente 16 vorteilhafterweise derart angeordnet, dass sie zum einen im wesentlichen liegend in die Mündung des Förderkanals 14 und zum anderen aufrecht nach oben spritzen bzw. sprühen, vgl. Figur 4.

Wie Figur 2 zeigt, sind zusätzlich zu den Ausbringelementen 16 an den Abstreifern 18 weitere Ausbringelemente 16 an der Unterkante 20 der Mündung 14 des Förderkanals 13 in den Laderaum 6 angeordnet, und zwar vorteilhafterweise eine Reihe von solchen Ausbringelementen 16, die sich quer über die Förderkanalmündung 14 erstreckt und im wesentlichen vor der Vorderkante des Ladebodens etwa auf dessen Höhe angeordnet sind. Wie Figur 2 zeigt, kann der Laderaumboden mit einem an sich bekannten Kratzboden 33 versehen sein.

Die Ausbringelemente 16 an den Abstreifern 18 sowie an der Unterkante der Förderkanalmündung 14 werden, wie Figur 1 andeutet, von einer motorisch betätigbaren Druckfördervorrichtung in Form einer Pumpe 27 gespeist, die im Bereich der Vorderwand des Laderaums 6 angeordnet sein kann. Die Pumpe 27 ist dabei über eine oder mehrere Leitungen 34 mit einem Mischer 26 einer Misch- und/oder Verteilvorrichtung 25 verbunden, die über verschiedene Speiseleitungen 35 mit mehreren Applikationsstoffspeicherbehältern 22 verbunden ist.

Wie Figur 1 sowie die Figuren 5 und 6 zeigen, sind die etwa fassförmigen Applikationsstoffspeicherbehälter 22 hinter dem Fahrwerk 4 unter dem Maschinenrahmen 5 aufgehängt. In der gezeichneten Ausführungsform sind dabei lediglich zwei Applikationsstoffspeicherbehälter 22 vorgesehen, die mit ihrer Längsachse liegend quer unter dem Maschinenrahmen 5 angeordnet sind. Es versteht sich jedoch, dass je nach Anforderungen an den Applikationsstoffaustrag auch mehr als zwei solche Applikationsstoffbehälter 22 unter dem Maschinenrahmen 5 oder ggf. auch an anderer Stelle angeordnet sein können.

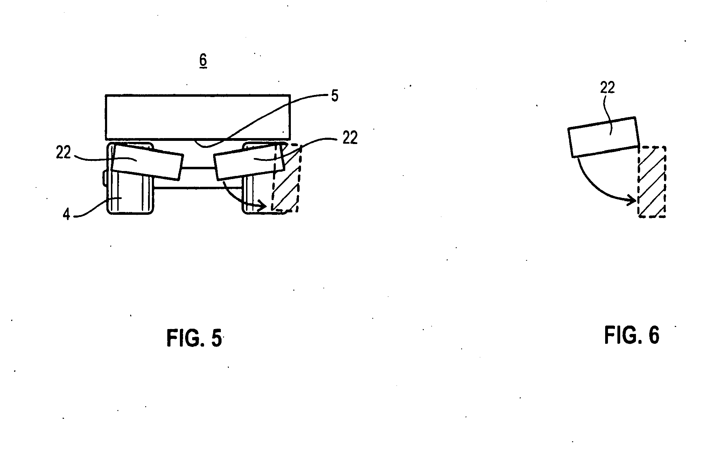

Die Applikationsstoffbehälter 22 sind vorteilhafterweise jeweils durch eine bewegbare Aufhängung 23 unter dem Maschinenrahmen 5 gelagert, so dass sie aus der in Figur 1 gezeichneten Betriebsstellung, in der die Applikationsstoffbehälter 22 unmittelbar unter dem Maschinenrahmen 5 liegend angeordnet sind, in eine in den Figuren 5 und 6 angedeutete Wechsel-/Rüststellung und zurück bewegt werden können. In der genannten Wechsel-/Rüststellung sind die Applikationsstoffbehälter 22 vorteilhafterweise in eine im wesentlichen aufrechte Stellung geschwenkt, wobei sie gleichzeitig zumindest ein Stück weit seitlich unter dem Maschinenrahmen 5 herausgeschwenkt sind, so dass sie seitlich über den Maschinenrahmen 5 leicht vorstehen, wodurch der Zugang zu den Applikationsstoffbehältern 22 in der Wechsel-/Rüststellung beträchtlich vereinfacht ist. Zudem kommen die Abziehöffnungen der Applikationsstoffbehälter 22 in der Wechsel-/Rüststellung auf einer oben liegenden Seite zu liegen. Die für die Bewegung der Applikationsstoffbehälter 22 vorgesehene Schwenkvorrichtung 24 der Aufhängung 23 wird vorteilhafterweise durch eine geeignete motorische Antriebseinheit beispielsweise in Form von Hydraulikzylindern betätigt, um eine einfache Handhabung sicherzustellen.

Ist ein Applikationsstoffbehälter 22 leer bzw. soll ein anderer Applikationsstoff Verwendung finden, muss lediglich das jeweilige Applikationsstofffass in die Wechsel-/Rüststellung herabgeschwenkt werden. Durch an der Aufhängung 23 vorgesehene Schnellverriegelungs- bzw. Schnellspannmittel kann der Applikationsstoffbehälter 22 werkzeuglos gelöst und durch einen anderen Applikationsstoffbehälter 22 ersetzt werden. Mittels der Schwenkvorrichtung 24 wird der Applikationsstoffbehälter 22 dann zurück in die Betriebsstellung unter dem Maschinenrahmen 4 geschwenkt.

Um ggf. die Kanäle des Mischers 26 bei einem solchen Wechsel oder auch bei anderer Gelegenheit spülen zu können, kann ein Waschbehälter 36 vorgesehen sein, über den Wasch- bzw. Spülflüssigkeit in den Mischer 26 gegeben werden kann. Um beispielsweise bei einem Behälterwechsel zu verhindern, dass aus dem System noch darin befindliches Applikationsmittel ungewollt auslöst, können an den Anschlüssen der Misch- und/oder Verteilvorrichtung 25 Absperreinrichtungen beispielsweise in Form von Kugelhähnen vorgesehen sein.

Der Applikationsstoffaustrag über die Ausbringelemente 16 wird von einer Steuereinrichtung 28, die einen Jobrechner umfassen kann, gesteuert, wobei die Steuereinrichtung 28 für den Applikationsstoffaustrag verschiedene Betriebs- und Erntegutparameter berücksichtigen kann. Dies können insbesondere die Fahrgeschwindigkeit, die auf dem Boden liegende Erntegutmenge, die durch den Förderkanal 13 geförderte Erntegutmenge, deren Fördergeschwindigkeit oder die Fördergeschwindigkeit der Aufnahmevorrichtung 7 oder die der Fördervorrichtung 10 und/oder der Belastungszustand der Fördervorrichtung 10 sein. Alternativ oder zusätzlich kann mittels geeigneter Erfassungsmittel auch die Erntegutfeuchte und/oder der Ernteguttyp bestimmt und berücksichtigt werden. Die Steuervorrichtung 28 umfasst vorteilhafterweise eine Vielzahl von Applikationsstoff-Austragsprogrammen, die in Form von Software in dem Jobrechner gespeichert sein können und je nach zu erledigender Aufgabe von einem Maschinenführer aufgerufen oder automatisch in Abhängigkeit der erfassten Maschinen- und/oder Erntegutparameter ausgewählt werden können.

Die Steuereinrichtung 28 steuert dabei vorteilhafterweise zum einen die Austragsmenge des Applikationsstoffes, beispielsweise durch Veränderung der Pumpenleistung und/oder Veränderung von Abgabeimpulsen an den Ausbringelementen 16, die vorteilhafterweise ventilgesteuert sein können. Alternativ oder zusätzlich kann die Steuereinrichtung 28 die Austragspunkte verändern, insbesondere durch Zuschalten oder Abschalten einzelner Ausbringelemente 16 und/oder Veränderung der Austragsmenge an einzelnen oder mehreren Ausbringelementen 16, was beispielsweise durch entsprechende Ventile erfolgen kann.

Alternativ oder zusätzlich kann die Steuereinrichtung 28 auch den Applikationsstoff auswählen und/oder mischen, indem die Steuereinrichtung 28 den Mischer 26 entsprechend ansteuert und hierdurch den Applikationsstoffabzug aus den Speicherbehältern 22 variiert.

## Patentansprüche

1. Erntemaschine, insbesondere Ladewagen, mit einer Aufnahmevorrichtung (7) zur Aufnahme von halm- und/oder blattförmigem Erntegut vom Boden, einer Fördervorrichtung (10), vorzugsweise in Form eines Förderrotors (11), zur Förderung des aufgenommenen Ernteguts von der Aufnahmevorrichtung (7) durch einen Förderkanal (13) in einen Erntegutraum (6), sowie einer Austragsvorrichtung (15) zum Ausbringen zumindest eines Applikationsstoffs, insbesondere eines Silagezusatzes, auf das Erntegut, **dadurch gekennzeichnet, dass** die Austragsvorrichtung (15) derart angeordnet ist, dass der Applikationsstoffaustrag stromab der Fördervorrichtung (10) im Bereich der Mündung (14) des Förderkanals (13) in den Erntegutraum, jedoch noch stromauf des Erntegutraums (6) erfolgt.

2. Erntemaschine nach dem vorhergehenden Anspruch, wobei der Applikationsstoffaustrag erst stromab eines der Fördervorrichtung (10) zugeordneten Schneidwerks (19) erfolgt.

3. Erntemaschine nach einem der vorhergehenden Ansprüche, wobei der Fördervorrichtung (10) Abstreifer (18) zum Abstreifen des Ernteguts von Eingriffselementen (12) der Fördervorrichtung (10) zugeordnet sind und die Austragsvorrichtung (15) im Bereich der Abstreifer (18) angeordnete Ausbringelemente (16), vorzugsweise düsenförmige Ausbringöffnungen (17), aufweist.

4. Erntemaschine nach dem vorhergehenden Anspruch, wobei die Abstreifer (18) im wesentlichen plattenförmig ausgebildet sind und die Ausbringelemente (16) an einer der Fördervorrichtung (10) abgewandten Stirnseite der Abstreifer (18) angeordnet sind.

5. Erntemaschine nach einem der beiden vorhergehenden Ansprüche, wobei an zumindest einem Abstreifer (18) mehrere in unterschiedliche Richtungen ausgerichtete Ausbringelemente (16) vorgesehen sind.

6. Erntemaschine nach einem der beiden vorhergehenden Ansprüche, wobei die Abstreifer (18) eine der Fördervorrichtung (10) abgewandte Hinterflanke (20) mit vorzugsweise stufenförmigen und/oder absatzartigen Konturwölbungen (21) aufweisen, im Bereich derer zumindest ein Ausbringelement (16) vorgesehen ist.

7. Erntemaschine nach einem der vorhergehenden Ansprüche, wobei im Bereich einer Unterkante (20) und/oder einer Oberkante der Mündung (14) des Förderkanals (13) in den Erntegutraum (6) zumindest ein Ausbringelement (16), vorzugsweise eine Reihe von Ausbringelementen (16) der Austragsvorrichtung (15) angeordnet ist.

8. Erntemaschine nach einem der vorhergehenden Ansprüche, wobei zumindest ein Applikationsstoffspeicherbehälter (22) unter einem den Erntegutraum (6) tragenden Maschinenrahmen (5) aufgehängt ist.

9. Erntemaschine nach dem vorhergehenden Anspruch, wobei für den zumindest einen Applikationsstoffspeicherbehälter (22) eine bewegliche Aufhängung (23) vorgesehen ist, mittels derer der Applikationsstoffspeicherbehälter (22) zwischen einer unter dem Maschinenrahmen liegenden Betriebsstellung und einer vorzugsweise abgesenkten und/oder vom Maschinenrahmen (5) zumindest teilweise herausgefahrenen Wechsel-/Rüststellung hin- und herbewegbar ist.

10. Erntemaschine nach dem vorhergehenden Anspruch, wobei der Applikationsstoffspeicherbehälter (22) in der Betriebsstellung unmittelbar unter dem Maschinenrahmen (5) vorzugsweise ohne wesentlichen seitlichen Überstand über den Maschinenrahmen (5) hinaus ungeordnet ist und in der Wechsel-/Rüststellung gegenüber der Betriebsstellung abgesenkt und/oder verkippt ist.

11. Erntemaschine nach einem der beiden vorhergehenden Ansprüche, wobei die Aufhängung (23) eine Schwenkvorrichtung (24), vorzugsweise eine Hubschwenkvorrichtung, zum Verschwenken des zumindest einen Applikationsstoffspeicherbehälters (22) zwischen dessen Betriebsstellung und dessen Wechsel-/Rüststellung aufweist.

12. Erntemaschine nach einem der drei vorhergehenden Ansprüche, wobei die Aufhängung (23) eine fremdenergiebetätigbare Antriebsvorrichtung aufweist.

13. Erntemaschine nach einem der vorhergehenden Ansprüche, wobei die Aufhängung (23) lösbare, vorzugsweise werkzeugfrei betätigbare Schnellbefestigungsmittel zum Wechseln des Applikationsstoffspeicherbehälters aufweist.

14. Erntemaschine nach einem der vorhergehenden Ansprüche, wobei mehrere Applikationsstoffspeicherbehälter (22) vorgesehen sind, die mit einer gemeinsamen Misch- und/oder Verteilvorrichtung zum Vermischen und/oder Abziehen der Applikationsstoffe aus unterschiedlichen Applikationsstoffspeicherbehältern (22) verbunden sind.

15. Erntemaschine nach einem der vorhergehenden Ansprüche, wobei zumindest ein, vorzugsweise alle, Applikationsstoffspeicherbehälter (22) in Fahrtrichtung hinter einem Fahrwerk (4) der Erntemaschine angeordnet sind.

16. Erntemaschine nach einem der vorhergehenden Ansprüche, wobei eine Druckfördervorrichtung, vorzugsweise in Form einer Pumpe, zur druckbeaufschlagten Förderung des Applikationsstoffes vorgesehen ist.

17. Erntemaschine nach einem der vorhergehenden Ansprüche, wobei eine Steuereinrichtung (28), vorzugsweise umfassend einen Steuerrechner, zur Steuerung des Applikationsstoffaustrags in Abhängigkeit von Maschinenbetriebs- und/oder Erntegutparametern vorgesehen ist.

18. Erntemaschine nach dem vorhergehenden Anspruch, wobei die Steuereinrichtung Bestimmungsmittel zur Bestimmung der Fahrgeschwindigkeit und Steuermittel zur Steuerung des Applikationsstoffaustrags in Abhängigkeit der bestimmten Fahrgeschwindigkeit aufweist.

19. Erntemaschine nach einem der beiden vorhergehenden Ansprüche, wobei die Steuereinrichtung Bestimmungsmittel zur Bestimmung einer aufzunehmenden Erntegutmenge auf dem Boden, der durch den Förderkanal (13) geförderten Erntegutmenge und/oder Fördergeschwindigkeit der Erntegutmenge sowie Steuermittel zur Steuerung des Applikationsstoffaustrags in Abhängigkeit der Erntegutmenge auf dem Boden, der durch den Förderkanal (13) geförderten Erntegutmenge und/oder der Fördergeschwindigkeit des Ernteguts aufweist.

20. Erntemaschine nach einem der drei vorhergehenden Ansprüche, wobei die Steuereinrichtung (28) Bestimmungsmittel zur Bestimmung einer Erntegutfeuchte und Steuermittel zur Steuerung des Applikationsstoffaustrags in Abhängigkeit der bestimmten Erntegutfeuchte aufweist.

21. Erntemaschine nach einem der vorhergehenden Ansprüche, wobei die Steuereinrichtung (28) Bestimmungsmittel zur Bestimmung des Ernteguttyps und Steuermittel zur Steuerung des Applikationsstoffaustrags in Abhängigkeit des bestimmten Ernteguttyps aufweist.

22. Erntemaschine nach einem der vorhergehenden Ansprüche, wobei die Steuereinrichtung (28) Austragssteuermittel zum Zuschalten und/oder Abschalten einzelner Applikationsstoffaustragspunkte und/oder zur Steuerung der Applikationsstoffaustragsmenge an einzelnen Applikationsstoffaustragspunkten aufweist.

23. Erntemaschine nach dem vorhergehenden Anspruch, wobei die Austragssteuermittel Ventile umfassen.

## Claims

1. A harvester, in particular a self-loading wagon, having a receiving apparatus (7) for the reception of stalk-shaped and/or leaf-shaped harvest from the ground, having a conveying device (10), preferably in the form of a conveying rotor (11), for the conveying of the received harvest by the reception apparatus (7) through a conveying passage (13) into a harvest space (6), and having a discharge apparatus (15) for the output of at least one application substance, in particular a silage additive, onto the harvest, **characterised in that** the discharge apparatus (15) is arranged such that the application substance output takes place downstream of the conveying apparatus (10) in the region of the opening (14) of the conveying passage (13) into the harvest space, but still upstream of the harvest space (6).

2. A harvester in accordance with the preceding claim, wherein the application substance output only takes place downstream of a cutting unit (19) associated with the conveying apparatus (10).

3. A harvester in accordance with one of the preceding claims, wherein scrapers (18) for the scraping of the harvest from engagement elements (12) of the conveying apparatus (10) are associated with the conveying apparatus (10) and the discharge apparatus (15) has output elements (16), preferably nozzle-shaped output openings (17), in the region of the scrapers (18).

4. A harvester in accordance with the preceding claim, wherein the scrapers (18) are made substantially in plate shape and the output elements (16) are arranged at an end face of the scrapers (18) remote from the conveying apparatus (10).

5. A harvester in accordance with one of the two preceding claims, wherein a plurality of output elements (16) orientated in different directions are provided at at least one scraper (18).

6. A harvester in accordance with one of the two preceding claims, wherein the scrapers (18) have a rear flank (20) remote from the conveying apparatus (10) with preferably step-shaped and/or heel-shaped contour arches (21) in the region of which at least one output element (16) is provided.

7. A harvester in accordance with one of the preceding claims, wherein at least one output element (16), preferably a row of output elements (16), of the discharge apparatus (15) is arranged in the region of a lower edge (20) and/or of an upper edge of the opening (14) of the conveying passage (13) into the harvest space (6).

8. A harvester in accordance with one of the preceding claims, wherein at least one application substance storage container (22) is hung below a machine frame (5) supporting the harvest space (6).

9. A harvester in accordance with the preceding claim, wherein a movable suspension (23) is provided for the at least one application substance storage container (22) and the application substance storage container (22) can be moved to and fro by said movable suspension between an operating position disposed below the machine frame and a preferably lowered changing/fitting position and/or a changing/fitting position moved out at least partly from the machine frame (5).

10. A harvester in accordance with the preceding claim, wherein the application substance storage container (22) is arranged directly below the machine frame (5), preferably without any substantial lateral overhang beyond the machine frame (5), in the operating position and is lowered and/or tilted with respect to the operating position in the changing/fitting position.

11. A harvester in accordance with one of the two preceding claims, wherein the suspension (23) has a pivot apparatus (24), preferably a lifting pivot apparatus, for the pivoting of the at least one application substance storage container (22) between its operating position and its changing/fitting position.

12. A harvester in accordance with one of the three preceding claims, wherein the suspension (23) has a drive apparatus actuable by external energy.

13. A harvester in accordance with one of the preceding claims, wherein the suspension (23) has releasable quick-fastening means, preferably actuable without tools, for the changing of the application substance storage container.

14. A harvester in accordance with one of the preceding claims, wherein a plurality of application substance storage containers (22) are provided which are connected to a common mixing and/or distribution apparatus for the mixing and/or removal of the application substances from different application substance storage containers (22).

15. A harvester in accordance with one of the preceding claims, wherein at least one application substance storage container, preferably all application substance storage containers (22), are arranged behind a chassis (4) of the harvester in the direction of travel.

16. A harvester in accordance with one of the preceding claims, wherein a pressurised conveying apparatus, preferably in the form of pump, is provided for the pressurised conveying of the application substance.

17. A harvester in accordance with one of the preceding claims, wherein a control device (28), preferably including a control computer, is provided for the control of the application substance discharge in dependence on machine operating parameters and/or harvest parameters.

18. A harvester in accordance with the preceding claim, wherein the control apparatus has determination means for the determination of the travel speed and control means for the control of the application substance discharge in dependence on the travel speed determined.

19. A harvester in accordance with one of the two preceding claims, wherein the control device has determination means for the determination of a harvest quantity to be received on the ground, of the harvest quantity conveyed through the conveying passage (13) and/or of the conveying speed of the harvest quantity as well as control means for the control of the application substance discharge in dependence on the harvest quantity on the ground, of the harvest quantity conveyed through the conveying passage (13) and/or of the conveying speed of the harvest.

20. A harvester in accordance with one of the three preceding claims, wherein the control device (28) has determination means for the determination of a harvest moisture and control means for the control of the application substance discharge in dependence on the determined harvest moisture.

21. A harvester in accordance with one of the preceding claims, wherein the control device (28) has determination means for the determination of the harvest type and control means for the control of the application substance discharge in dependence on the determined harvest type.

22. A harvester in accordance with one of the preceding claims, wherein the control device (28) has discharge control means for the switching in and/or out of individual application substance discharge points and/or for the control of the application substance quantity at individual application substance discharge points.

23. A harvester in accordance with the preceding claim, wherein the discharge control means include valves.

## Revendications

1. Moissonneuse, notamment un chargeur, avec un dispositif de ramassage (7) destiné au ramassage de récolte en forme de paille et/ou de feuilles du sol, un dispositif de convoyage (10), de préférence en forme d'un rotor de convoyage (11), destiné au convoyage de la récolte ramassée par le dispositif de ramassage (7) à travers un canal de convoyage (13) dans une chambre de récolte (6), ainsi qu'un dispositif de décharge (15) pour récolter au moins un agent d'application, notamment un additif d'ensilage sur la récolte, **caractérisée en ce que** le dispositif de décharge (15) est disposé de manière à ce que la décharge de l'agent d'application s'effectue en aval du dispositif de convoyage (10) dans la zone de l'embouchure (14) du canal de convoyage (13) dans la chambre de récolte, mais toutefois encore en amont de la chambre de récolte (6).

2. Moissonneuse selon la revendication précédente, sachant que la décharge de l'agent d'application s'effectue seulement en aval d'une des barres de coupes (19) affectées au dispositif de convoyage (10).

3. Moissonneuse selon l'une des revendications précédentes, sachant que des tringles de débourrage (18) sont affectées au dispositif de convoyage (10) pour débourrer la récolte d'éléments d'action (12) du dispositif de convoyage (10) et que le dispositif de décharge (15) présente des éléments de récolte (16) disposés dans la zone des tringles de débourrage (18), de préférence des ouvertures de récolte (17) en forme de tuyère.

4. Moissonneuse selon la revendication précédente, sachant que les tringles de débourrage (18) sont principalement construites en forme de plaque et que les éléments de récolte (16) sont disposés sur une des faces frontales détournée des dispositifs de convoyage (10) des tringles de débourrage (18).

5. Moissonneuse selon l'une des deux revendications précédentes, sachant que sur au moins une tringle de débourrage (18), plusieurs éléments de récolte (16) orientés dans différentes directions sont prévus.

6. Moissonneuse selon l'une des deux revendications précédentes, sachant que les tringles de débourrage (18) présentent un des flancs arrières (20) détournés du dispositif de convoyage (10) avec des cintrages de contours (21) de préférence en forme de gradins et/ou de saillie, dans la zone desquels au moins un élément de récolte (16) est prévu.

7. Moissonneuse selon l'une des revendications précédentes, sachant que dans la zone d'une bordure inférieure (20) et/ou d'une bordure supérieure de l'embouchure (14) du canal de convoyage (13) dans la chambre de récolte (6), au moins un élément de récolte (16) est disposé, de préférence une série d'éléments de récolte (16) du dispositif de décharge (15).

8. Moissonneuse selon l'une des revendications précédentes, sachant qu'au moins un réservoir de stockage de l'agent d'application (22) est suspendu au-dessous d'un cadre de machine (5) portant la chambre de récolte (6).

9. Moissonneuse selon la revendication précédente, sachant que pour au moins l'un des réservoirs de stockage de l'agent d'application (22), une suspension mobile (23) est prévue, à l'aide de laquelle le réservoir de stockage de l'agent d'application (22) est déplaçable dans plusieurs sens entre une position d'exploitation se trouvant au-dessous du cadre de la machine et une position d'équipement/de remplacement abaissée de préférence et/ou sortant au moins en partie du cadre de machine (5).

10. Moissonneuse selon la revendication précédente, sachant que le réservoir de stockage de l'agent d'application (22) est disposé dans la position d'exploitation immédiatement au-dessous du cadre de machine (5) et de préférence sans porte-à-faux latéral important vers l'extérieur au-dessus du cadre de machine (5) et qu'il est abaissé et/ou basculé dans la position d'équipement/de remplacement par rapport à la position d'exploitation.

11. Moissonneuse selon l'une des deux revendications précédentes, sachant que la suspension (23) présente un dispositif de pivotement (24), de préférence un dispositif de pivotement de levage, destiné à pivoter au moins l'un des réservoirs de stockage de l'agent d'application (22) entre sa position d'exploitation et sa position d'équipement/de remplacement.

12. Moissonneuse selon l'une des trois revendications précédentes, sachant que la suspension (23) présente un dispositif d'entraînement actionnable par énergie externe.

13. Moissonneuse selon l'une des revendications précédentes, sachant que la suspension (23) présente des éléments de fixation instantanés amovibles, actionnables de préférence sans outils pour remplacer le réservoir de stockage de l'agent d'application.

14. Moissonneuse selon l'une des revendications précédentes, sachant que plusieurs réservoirs de stockage de l'agent d'application (22) sont prévus, étant reliés avec un dispositif commun de brassage et/ou de distribution pour mélanger et/ou ôter les agents d'application hors de différents réservoirs de stockage de l'agent d'application (22).

15. Moissonneuse selon l'une des revendications précédentes, sachant qu'au moins un, mais de préférence tous les réservoirs de stockage de l'agent d'application (22) sont disposés dans le sens de déplacement derrière un mécanisme de roulement (4) de la moissonneuse.

16. Moissonneuse selon l'une des revendications précédentes, sachant qu'un dispositif de transport d'extraction est prévu, de préférence sous la forme d'une pompe, et destiné au transport pressurisé de l'agent d'application.

17. Moissonneuse selon l'une des revendications précédentes, sachant qu'un dispositif de commande (28), comprenant de préférence un ordinateur de commande, est prévu pour la commande de la décharge de l'agent d'application en fonction des paramètres d'exploitation de la machine et/ou de récolte.

18. Moissonneuse selon la revendication précédente, sachant que le dispositif de commande présente des organes de détermination destinés à la détermination de la vitesse de déplacement et des organes de commande destinés à la commande de la décharge de l'agent d'application en fonction de la vitesse de déplacement déterminée.

19. Moissonneuse selon l'une des deux revendications précédentes, sachant que le dispositif de commande présente des organes de détermination destinés à la détermination d'un volume de récolte à ramasser sur le sol, du volume de récolte convoyé à travers le canal de convoyage (13) et/ou de la vitesse de convoyage du volume de récolte ainsi que des organes de commande destinés à la commande de la décharge de l'agent d'application en fonction du volume de récolte sur le sol, du volume de récolte convoyé à travers le canal de convoyage (13) et/ou de la vitesse de convoyage de la récolte.

20. Moissonneuse selon l'une des trois revendications précédentes, sachant que le dispositif de commande (28) présente des organes de détermination destinés à la détermination d'une humidité de la récolte et des organes de commande destinés à la commande de la décharge de l'agent d'application en fonction de l'humidité déterminée de la récolte.

21. Moissonneuse selon l'une des revendications précédentes, sachant que le dispositif de commande (28) présente des organes de détermination destinés à la détermination du type de récolte et des organes de commande destinés à la commande de la décharge de l'agent d'application en fonction du type de récolte déterminé.

22. Moissonneuse selon l'une des revendications précédentes, sachant que le dispositif de commande (28) présente des organes de commande de la décharge destinés à la mise en circuit et/ou à l'arrêt de certains points de décharge de l'agent d'application et/ou à la commande de la décharge de l'agent d'application sur certains points de décharge de l'agent d'application.

23. Moissonneuse selon la revendication précédente, sachant que les organes de commande de décharge comprennent des soupapes.
